# EUROPÄISCHE PATENTSCHRIFT

(11) **EP 1 475 280 B1**
(45) Veröffentlichungstag und Bekanntmachung des Hinweises auf die Patenterteilung: **27.07.2005**
(21) Anmeldenummer: 03010373.3
(22) Anmeldetag: 08.05.2003
(51) Int. Cl.: B60R 22/195

(54) **Antrieb für Gurtstraffer**
Drive for safety belt pretensioner
Entraînement pour un prétensionneur de ceinture de sécurité

(43) Veröffentlichungstag der Anmeldung: 10.11.2004
(73) Patentinhaber: Delphi Technologies, Inc., Troy, MI 48007 (US)
(72) Erfinder: Maierhofer, Gunter, 10249 Berlin (DE); Marshall, Steve, Low Seaton, Cumbria CA14 1PP (GB)
(74) Vertreter: Manitz, Finsterwald & Partner GbR

(56) Entgegenhaltungen:
- EP-A- 0 628 454
- EP-A- 0 678 427
- DE-A- 4 317 708
- US-A- 4 230 288
- PATENT ABSTRACTS OF JAPAN vol. 018, no. 503 (M-1677), 21. September 1994 (1994-09-21) -& JP 06 171462 A (TAKATA KK), 21. Juni 1994 (1994-06-21)

## Beschreibung

Die vorliegende Erfindung betrifft einen Antrieb für eine Gurtspindel zum Straffen eines Sicherheitsgurtes nach dem Oberbegriff des Anspruch 1.

Derartige Antriebe sind zum Straffen von Sicherheitsgurten aus der EP-A-0628454, DE-A-4317708, EP-A-0678427 und JP 06171462 bekannt. Im Falle eines durch einen Beschleunigungssensor ermittelten Unfalls wird von einer Steuereinheit der Gasgenerator gezündet, so dass das Antriebselement mit Gasdruck beaufschlagt wird und dadurch die Antriebswelle dreht, wodurch die Gurtspindel innerhalb sehr kurzer Zeit in Gurtaufwickelrichtung gedreht wird, so dass aus dem Sicherheitsgurt Gurtlose beseitigt werden.

Es ist die Aufgabe der vorliegenden Erfindung, einen Antrieb der eingangs genannten Art zu schaffen, der bei hohen Strafferleistungen eine kompakte Bauweise aufweist.

Die Lösung dieser Aufgabe erfolgt durch die Merkmale des unabhängigen Anspruchs 1.

Erfindungsgemäß ist als Antriebselement ein an der Antriebswelle befestigter starrer Arm vorgesehen, der von Gasdruck des Gasgenerators beaufschlagbar ist. Durch ein derart ausgebildetes Antriebselement kann der Antrieb insgesamt äußerst kompakt ausgebildet werden, wobei gleichzeitig hohe Strafferleistungen erzielbar sind, da im Bereich des Antriebselementes keine elastische Gestaltänderung erfolgt und kein Element aufgewickelt werden muss, was höhere Reibung und damit eine Leistungsreduzierung bewirken würde.

Außerdem ist erfindungsgemäß die Antriebswelle mit einem Antriebszahnrad verbunden, das in seiner Zahnung eine Lücke aufweist, in deren Bereich sich das Zahnrad einer Abtriebswelle frei drehen kann. So kann auf eine Kupplung zum Einkoppeln des Antriebs an die Abtriebswelle, beispielsweise an die Gurtspindel, völlig verzichtet werden, da sich im Normalbetrieb die Abtriebswelle frei drehen kann, wobei die Zähne der Abtriebswelle sich durch die Lücke in der Zahnung der Antriebswelle hindurchbewegen. Soll jedoch der Antrieb betätigt werden, so dreht sich die Antriebswelle zusammen mit dem Antriebszahnrad, woraufhin die Zähne des Antriebszahnrades zwischen die Zähne des Zahnrades der Abtriebswelle eingreifen.

Vorteilhafte Ausführungsformen der Erfindung sind in der Beschreibung, der Zeichnung sowie den Unteransprüchen beschrieben.

Nach einer ersten vorteilhaften Ausführungsform kann eine Innenwand des Druckraums bezogen auf die Achse der Antriebswelle einen konstanten Krümmungsradius aufweisen. Hierdurch ist ein Druckraum mit einer auf einer Kreisbahn verlaufenden Innenwand geschaffen, so dass der an der Antriebswelle befestigte starre Arm bei Durchlaufen des Druckraumes stets einen konstanten Abstand zu der Innenwand aufweist. Es ist dabei vorteilhaft, wenn sich die kreisförmig gestaltete Innenwand über einen Umfangswinkel von etwa 270° oder mehr erstreckt, da hierdurch eine hohe Strafferleistung erzielbar ist.

Nach einer weiteren vorteilhaften Ausführungsform kann der Arm mit einem Dichtelement versehen sein, das sich innerhalb des Druckraumes in Axialrichtung der Antriebswelle erstreckt, wobei der Arm insbesondere entlang seines gesamten Umfangs mit dem Dichtelement versehen sein kann. Hierdurch ergibt sich neben einer einfachen Herstellung eine gute Abdichtung des sich in dem Druckraum bewegenden Armes gegenüber den umgebenden Wänden des Druckraumes.

Nach einer weiteren Ausbildung der Erfindung ist die Antriebswelle, die von dem Arm in Drehung versetzt wird, mit einem Antriebszahnrad verbunden, das mit einer Abtriebswelle koppelbar ist, wobei insbesondere zwischen Antriebs- und Abtriebswelle eine Übersetzung vorgesehen sein kann. Durch die Verwendung von Zahnrädern zum Übertragen der Antriebskraft kann eine verlustarme Kraftübertragung erreicht werden, wobei gleichzeitig große Kräfte übertragen werden können. Durch Verwendung einer Übersetzung zwischen Antriebs- und Abtriebswelle lässt sich der von der Abtriebswelle zurückgelegte Weg erhöhen. Beispielsweise kann eine Übersetzung im Verhältnis von 1:2 vorgesehen werden, so dass bei einer Umdrehung der Antriebswelle von der Abtriebswelle 2 Umdrehungen zurückgelegt werden.

Hierbei kann es vorteilhaft sein, wenn die an die Lücke angrenzenden Zähne sich in Zahnhöhe und/oder Flankenwinkel von den übrigen Zähnen des Antriebszahnrades unterscheiden. Hierdurch kann die Größe der Lücke optimiert werden, die für das freie Drehen des Zahnrades der Abtriebswelle erforderlich ist.

Nach einer weiteren Ausbildung der Erfindung ist die Abtriebswelle mit einer Gurtspindel starr verbunden, d.h. zwischen Abtriebswelle und Gurtspindel ist keine Kupplungseinrichtung vorhanden. Hierdurch kann außerordentlich kompakt und kostengünstig gebaut werden.

Um die Leistung des Antriebs weiter zu erhöhen, kann es vorteilhaft sein, dass der Druckraum zwei Druckkammern aufweist, in denen jeweils ein an einer Antriebswelle befestigter starrer Arm vorgesehen ist. Durch Kopplung der beiden Antriebswellen mit einer Abtriebswelle lässt sich die Leistung des Antriebs weiter steigern.

Besonders vorteilhaft ist eine Ausbildung des Antriebs, bei der bei Auslösen des Gasgenerators ein Antriebszahnrad der Antriebswelle ohne Zwischenschaltung einer Kupplung selbsttätig in ein Zahnrad der Abtriebswelle einkoppelt. Hierdurch kann auf eine Kupplung völlig verzichtet werden, wodurch neben einer kompakten Bauform eine kostengünstige Herstellung des Antriebs möglich ist.

Nachfolgend wird die vorliegende Erfindung rein beispielhaft an Hand einer vorteilhaften Ausführungsform und unter Bezugnahme auf die beigefügten Zeichnungen beschrieben. Es zeigen:
- Fig. 1: eine Explosionsdarstellung eines Antriebs für eine Gurtspindel;
- Fig. 2: eine Draufsicht auf die Antriebsseite des Antriebs von Fig. 1; und
- Fig. 3: eine Draufsicht auf die Abtriebsseite des Antriebs von Fig. 1 und 2.

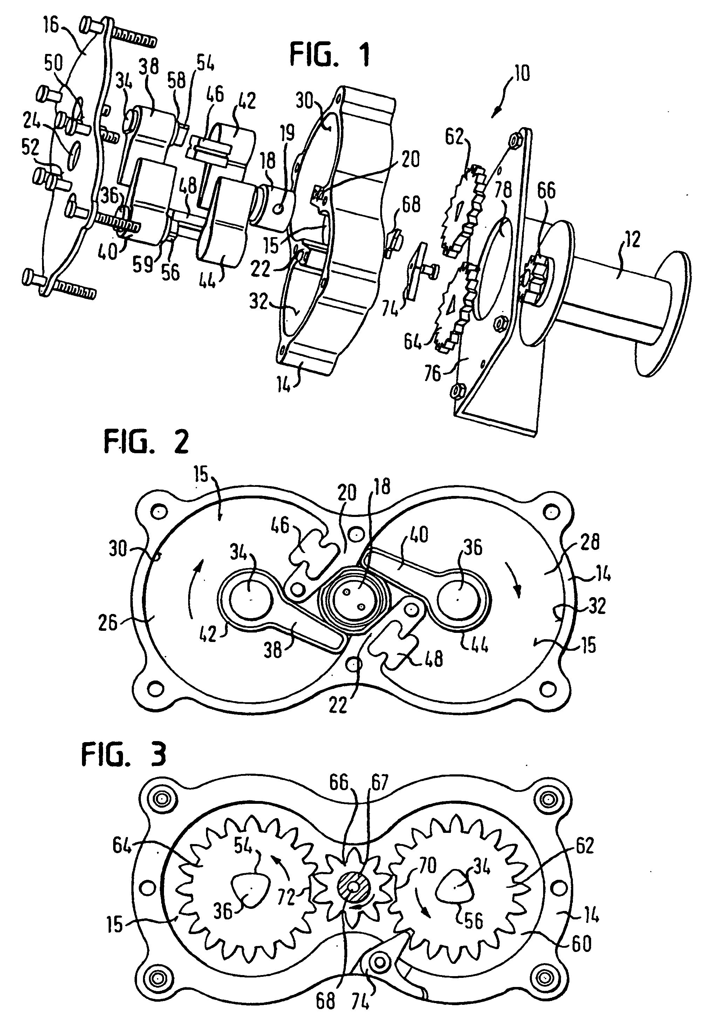

Fig. 1 zeigt in perspektivischer Explosionsdarstellung einen Antrieb 10 für eine Gurtspindel 12, der ein Gehäuse 14 aufweist, das von einem Gehäusedeckel 16 druckdicht verschließbar ist. Im Inneren des annähernd achterförmigen Gehäuses 14 ist in der Mitte ein Gasgenerator 18 angeordnet, der zwischen zwei Gehäusestege 20 und 22 eingesetzt ist. Die Oberseite des Gasgenerators 18 ragt durch eine im Gehäusedeckel 16 vorgesehene Öffnung 24 abgedichtet nach außen vor, um eine Kontaktierung des Gasgenerators 18 zu ermöglichen.

Im Inneren des Gehäuses 14 ist ein Druckraum vorgesehen, der zwei kreissegmentförmige Druckkammern 26 und 28 aufweist, die durch den Gasgenerator 18 voneinander getrennt sind, wobei jeweils eine Gasaustrittsöffnung 19 in eine der Druckkammern 26, 28 weist. Jede Druckkammer 26 und 28 ist durch einen Boden 15 des Gehäuses 14, durch den Gehäusedeckel 16 und in Umfangsrichtung durch jeweils eine kreisförmige Innenwand 30, 32 begrenzt.

Im Zentrum der beiden Druckkammern 26 und 28 ist jeweils eine Antriebswelle 34 und 36 vorgesehen, an der als Antriebselement jeweils ein starrer Arm 38 und 40 befestigt ist. Die Arme 38 und 40 sind annähernd zeigerförmig ausgebildet und verjüngen sich etwas in radialer Richtung. Im Bereich der Antriebswellen 34 und 36 bilden die Arme 38 und 40 jeweils eine kreisförmige Aufnahme. Alternativ ist es auch möglich, die Antriebswellen und die Arme einstückig auszubilden. An der Unterseite der Arme 38 und 40 setzen sich die Antriebswellen 34 und 36 in einen im Querschnitt kreisrunden Wellenabschnitt 58, 59 fort, an den sich ein im Querschnitt etwa dreieckiger Fortsatz 54, 56 anschließt.

Jeder der Arme 38 und 40 ist mit einem Dichtelement 42, 44 versehen, das die gleiche Umfangskontur wie der Arm aufweist und aus einem weichen Kunststoffmaterial besteht. Das Dichtelement ist jeweils auf den Arm aufgesteckt oder mit anderen Worten ist jeder Arm 38 und 40 in das ihn entlang seines gesamten Umfangs umgebende Dichtelement 42, 44 eingesetzt. Somit erstreckt sich jedes Dichtelement innerhalb der Druckkammern 26 und 28 in Axialrichtung der Antriebswelle 34, jedoch nicht entlang der in Fig. 2 sichtbaren Oberseite sowie entlang der Unterseite der Arme 38 und 40. Hierdurch wird eine gute Abdichtung der Druckkammern 26 und 28 erzielt.

Wie die Fig. 1 und 2 zeigen, können sich die Arme 38, 40 in jeder Druckkammer 26, 28 über einen Winkelbereich von etwa 280° drehen. Hierbei ist in Fig. 2 die Ausgangsposition der Arme dargestellt, d.h. die Ausgangslage, in der sich die Arme 38, 40 befinden, bevor der Gasgenerator 18 gezündet worden ist. Im Bereich der (nicht dargestellten) Endposition der Arme 38 und 40 ist in dem Gehäuse 14 im Bereich der Gehäusestege 20 und 22 jeweils ein Auslassfilter 46, 48 vorgesehen, der in jeweils eine Entlüftungspassage eingesetzt ist. Die Entlüftungspassage ermöglicht einen Auslass der von den Armen 38 und 40 verdrängten Luft heraus aus den Druckkammern 26 und 28. Zu diesem Zweck sind in dem Gehäusedeckel 16 zwei Auslassöffnungen 50 und 52 vorgesehen. Die Auslassfilter 46 und 48 können beispielsweise aus einem gestrickten Stahlstrumpf bestehen und filtern von dem Gasgenerator 18 stammende Partikel aus, welche die Dichtelemente 42 und 44 überwunden haben.

Wie aus den Fig. 1 und 2 zu erkennen ist, ist der Zusammenbau des dargestellten Strafferantriebs äußerst einfach. Für einen Zusammenbau müssen die Arme 38 und 40 in die zugehörigen Dichtelemente 42 und 44 eingesteckt werden und anschließend werden die Arme 38 und 40 mit den kreisrunden Wellenabschnitten 58, 59 in zugehörige Öffnungen im Gehäuseboden 15 eingesetzt. Anschließend müssen lediglich der Gasgenerator 18 sowie die beiden Auslassfilter 46 und 48 in das Gehäuse 14 eingesetzt werden, woraufhin der Gehäusedeckel 16, gegebenenfalls unter Zwischenlage einer Dichtung, mit den in Fig. 1 dargestellten Schrauben mit dem Gehäuse 14 verschraubt werden kann. Hierdurch ist die Montage des antriebsseitigen Bereichs des Strafferantriebs abgeschlossen. Der abtriebsseitige Bereich des Strafferantriebs wird nachfolgend beschrieben.

Wie insbesondere die Fig. 1 und 3 zeigen, ist auf der dem Gehäusedeckel 16 abgewandten Seite des Gehäuses 14 eine Getriebekammer 60 vorgesehen, die an ihrer Unterseite von dem Gehäuseboden 15 begrenzt wird. In der Getriebekammer 60 sind insgesamt drei Zahnräder vorgesehen, nämlich ein mit der Antriebswelle 34 verbundenes Antriebszahnrad 62, ein mit der Antriebswelle 36 verbundenes Antriebszahnrad 64 und ein mit einer Abtriebswelle 67 verbundenes Abtriebszahnrad 66, wobei die Abtriebswelle 67 starr mit der Gurtspindel 12 (Fig. 1) verbunden ist. Das Abtriebszahnrad 66 ist dabei auf einen Wellenzapfen 68 aufgesetzt, der in den Boden 15 der Getriebekammer 60 eingesetzt ist.

Die beiden Antriebszahnräder 62 und 64 sind identisch zueinander und weisen beim dargestellten Ausführungsbeispiel jeweils 19 Zähne auf. Das Abtriebszahnrad 66 ist demgegenüber wesentlich kleiner als die Antriebszahnräder 62 und 64 und weist insgesamt 10 Zähne auf. Wie Fig. 3 zeigt, ist in der Zahnung der Antriebszahnräder 62 und 64 jeweils eine Lücke 70, 72 vorgesehen, indem ein Zahn weggelassen ist, wobei zu beiden Seiten der Lücken 70 und 72 die angrenzenden Zähne des jeweiligen Antriebszahnrades 62 und 64 eine geringere Zahnhöhe und andere Flankenwinkel als die übrigen Zähne aufweisen. Hierdurch sind die Lücken 70 und 72 so ausgebildet, dass sich in der in Fig. 3 dargestellten Position das Abtriebszahnrad 66 um den Wellenzapfen 68 frei drehen kann, wobei sich die Zähne des Abtriebszahnrades 66 durch die Lücken 70 und 72 der Antriebszahnräder 62 und 64 hindurchbewegen.

Schließlich ist in Fig. 3 eine Auslöseanzeige 74 in Form eines verschwenkbaren Hebels dargestellt, der an seinem einen Ende in das Antriebszahnrad 62 eingreift und an seinem anderen Ende eine Anzeigefahne aufweist. Wird das Antriebszahnrad 62 in der in Fig. 3 dargestellten Richtung verdreht, so schwenkt die Auslöseanzeige im Uhrzeigersinn, so dass die Anzeigefahne außen erkennbar ist und man zu jedem Zeitpunkt erkennen kann, dass der Antrieb betätigt worden ist.

Die Montage der Abtriebsseite des in Fig. 1 bis 3 dargestellten Antriebs ist wiederum außerordentlich einfach. Hier müssen lediglich die beiden Antriebszahnräder 62 und 64 in der in Fig. 3 dargestellten Stellung auf die Antriebswellen 34 und 36 aufgesteckt werden, der Wellenzapfen 68 muss in den Boden 15 der Getriebekammer 60 eingesetzt werden und die Auslöseanzeige 74 wird an dem Gehäuse 14 verschraubt. Anschließend kann die gesamte Anordnung mit einer Abdeckung 76 (Fig. 1) verschraubt werden, die eine Öffnung 78 aufweist, durch die das Abtriebszahnrad 66 auf den Wellenzapfen 68 aufgesetzt werden kann.

Die Betriebsweise des in den Fig. 1 bis 3 dargestellten Antriebs ist wie folgt:

Zunächst wird der Antrieb wie in der vorstehend beschriebenen Weise montiert, wobei die mit dem Abtriebszahnrad 66 starr verbundene Gurtspindel 12 zusätzlich durch eine weitere Welle oder einen Wellenzapfen oder dergleichen gelagert werden kann. Ferner können übliche Sicherheitsvorrichtungen, wie beispielsweise Gurtkraftbegrenzer und über Trägheit ausgelöste Blockiervorrichtungen sowie Gurtaufrollmechanismen mechanischer oder elektrischer Art vorgesehen sein. Bei auf der Spindel 12 aufgewickeltem Gurtband ist es im Normalbetrieb jederzeit möglich, die Spindel 12 zu drehen, wobei sich das mit der Spindel 12 verbundene Abtriebszahnrad 66 frei durch die Lücken 70, 72 in den Antriebszahnrädern 62 und 64 hindurchbewegt.

Im Falle eines Unfalls wird der Gasgenerator 18 aktiviert, so dass aus dessen Gasaustrittsöffnungen 19 Gas in die beiden Druckkammern 26 und 28 strömt, wodurch die Arme 38 und 40 mit Gasdruck beaufschlagt werden. Hieraufhin beginnen sich die Arme 38 und 40 um die Antriebswellen 34 und 36 in Pfeilrichtung zu drehen, wobei die in den Druckkammern 26 und 28 verdrängte Luft durch die Auslassöffnungen 50 und 52 aus dem Gehäuse 14 austritt, wobei die austretende Luft über die Auslassfilter 46 und 48 gereinigt wird. Durch die Schwenkbewegung der Wellen 34 und 36 werden die Antriebszahnräder 62 und 64 (Fig. 3) in Pfeilrichtung gedreht, woraufhin ein Zahneingriff zwischen den Zähnen der Antriebszahnräder 62 und 64 und dem Abtriebszahnrad 66 stattfindet, das starr mit der Spindel 12 verbunden ist. Dies wiederum hat zur Folge, dass die Spindel 12 in Gurtaufwickeleinrichtung bewegt wird, um den Gurt zu straffen. Gleichzeitig wird die Auslöseanzeige 74 verschwenkt, so dass von außen erkennbar ist, dass eine Aktivierung des Antriebs stattgefunden hat.

Die Arme 38 und 40 werden aufgrund des von dem Gasgenerator 18 erzeugten Gasdrucks in Pfeilrichtung (Fig. 2) verschwenkt, bis diese in den Bereich der Auslassfilter 46 und 48 verdreht worden sind. Hierbei haben die Antriebszahnräder 62 und 64 in Umfangsrichtung etwa 270° zurückgelegt, wohingegen das Abtriebszahnrad 66 und damit auch die Gurtspindel 12 den doppelten Winkelbereich überstrichen hat.

Nach Auslösen des Gasgenerators und Durchführung des Straffervorgangs ist es aufgrund der erfindungsgemäßen Konstruktion jederzeit möglich, die Gurtspindel wieder in Gurtabzugsrichtung zu bewegen, da aufgrund des nunmehr fehlenden Gasdrucks ein Zurückdrehen der Antriebszahnräder 62 und 64 ohne weiteres möglich ist.

Es sei darauf hingewiesen, dass die Erfindung nicht auf die dargestellten Ausführungsbeispiele beschränkt ist. Beispielsweise müssen nicht stets zwei Antriebswellen vorgesehen sein.

### Bezugszeichenliste

- 10: Antrieb
- 12: Gurtspindel
- 14: Gehäuse
- 15: Boden
- 16: Gehäusedeckel
- 18: Gasgenerator
- 19: Gasaustrittsöffnung
- 20,22: Gehäusesteg
- 24: Öffnung
- 26, 28: Druckkammer
- 30, 32: Innenwand
- 34, 36: Antriebswelle
- 38,40: Arm
- 42, 44: Dichtelement
- 46, 48: Auslassfilter
- 50, 52: Auslassöffnung
- 54, 56: Fortsatz
- 58, 59: Wellenabschnitt
- 60: Getriebekammer
- 62, 64: Antriebszahnrad
- 66: Abtriebszahnrad
- 67: Abtriebswelle
- 68: Wellenzapfen
- 70, 72: Lücke
- 74: Auslöseanzeige
- 76: Abdeckung
- 78: Öffnung

## Patentansprüche

1. Antrieb für eine Gurtspindel (12), umfassend
ein Gehäuse (14) mit einem Gasgenerator (18), dessen Gasaustrittsöffnung (19) in einen innerhalb des Gehäuses (14) vorgesehenen Druckraum (26, 28) mündet, und
zumindest eine in dem Gehäuse (14) drehbar angeordnete Antriebswelle (34, 36), an der zumindest ein Antriebselement befestigt ist, das von Gasdruck des Gasgenerators (18) beaufschlagbar ist, und **dadurch** die Antriebswelle (34, 36) dreht,
wobei das Antriebselement ein an der Antriebswelle (34, 36) befestigter starrer Arm (38, 40) ist,
**dadurch gekennzeichnet, dass**
die Antriebswelle (34, 36) mit einem Antriebszahnrad (62, 64) verbunden ist, das in seiner Zahnung eine Lücke (70, 72) aufweist, in deren Bereich sich ein Zahnrad (66) einer Abtriebswelle (67) frei drehen kann.

2. Antrieb nach Anspruch 1,
**dadurch gekennzeichnet, dass**
eine Innenwand (30, 32) des Druckraums (26, 28) bezogen auf die Achse der Antriebswelle (34, 36) einen konstanten Krümmungsradius aufweist und sich insbesondere über einen Umfangswinkel von etwa 270° erstreckt.

3. Antrieb nach Anspruch 1,
**dadurch gekennzeichnet, dass**
der Arm (38, 40) mit einem Dichtelement (42, 44) versehen ist, das sich innerhalb des Druckraumes (26, 28) in Axialrichtung der Antriebswelle (34, 36) erstreckt und das insbesondere den Arm (38, 40) entlang seines gesamten Umfanges umgibt.

4. Antrieb nach Anspruch 1,
**dadurch gekennzeichnet, dass**
die Antriebswelle (34, 36) mit dem Antriebszahnrad (62, 64) verbunden ist, das mit der Abtriebswelle (67) koppelbar ist, wobei insbesondere zwischen Antriebs- und Abtriebswelle eine Übersetzung vorgesehen ist.

5. Antrieb nach Anspruch 1,
**dadurch gekennzeichnet, dass**
sich insbesondere die an die Lücke (70, 72) der Zahnung des Antriebzahnrads (62, 64) angrenzenden Zähne in Zahnhöhe und/oder Flankenwinkel von den übrigen Zähnen des Antriebszahnrades (62, 64) unterscheiden.

6. Antrieb nach Anspruch 1,
**dadurch gekennzeichnet, dass**
die Abtriebswelle (67) mit einer Gurtspindel (12) starr verbunden ist.

7. Antrieb nach Anspruch 1,
**dadurch gekennzeichnet, dass**
der Druckraum zwei Druckkammern (26, 28) aufweist, in denen jeweils ein an einer Antriebswelle (34, 36) befestigter starrer Arm (38, 40) vorgesehen ist.

8. Antrieb nach Anspruch 1,
**dadurch gekennzeichnet, dass**
die Antriebswelle (34, 36) über das Antriebszahnrad (62, 64) und das Zahnrad (66) mit der Abtriebswelle (67) koppelbar ist, so dass die Zwischenschaltung einer Kupplung nicht erforderlich ist.

9. Antrieb nach Anspruch 1,
**dadurch gekennzeichnet, dass**
bei Auslösen des Gasgenerators (18) die Antriebswelle (34, 36) schwenkt, wodurch das Antriebszahnrad (62, 64) der Antriebswelle (34, 36) selbsttätig in das Zahnrad (66) der Abtriebswelle (67) einkoppelt, so dass die Zwischenschaltung einer Kupplung nicht erforderlich ist.

10. Antrieb nach Anspruch 1,
**dadurch gekennzeichnet, dass**
nach Auslösen des Gasgenerators (18) und Bewegen des Armes (38, 40) die mit der Antriebswelle (34, 36) gekoppelte Abtriebswelle (67) frei drehbar ist.

## Claims

1. Drive for a belt spindle (12) comprising a housing (14) with a gas generator (18), whose gas outlet opening (19) runs into a pressure chamber (26, 28) provided inside the housing (14), and at least one drive shaft (34, 36) arranged rotatably in the housing (14) and to which at least one drive element is fastened which can be acted upon by gas pressure from the gas generator (18) and by this means turns the drive shaft (34, 36), wherein the drive element is a rigid arm (38, 40) fastened to the drive shaft (34, 36), **characterised in that** the drive shaft (34, 36) is connected to a drive gearwheel (62, 64) which in its toothed structure has a gap (70, 72) in the region of which a gearwheel (66) of an output shaft (67) can freely rotate.

2. Drive according to claim 1, **characterised in that** an inner wall (30, 32) of the pressure chamber (26, 28) has a constant radius of curvature with reference to the axis of the drive shaft (34, 36) and in particular extends over a circumferential angle of approximately 270°.

3. Drive according to claim 1, **characterised in that** the arm (38, 40) is provided with a sealing element (42, 44) which extends inside the pressure chamber (26, 28) in the axial direction of the drive shaft (34, 36) and in particular surrounds the arm (38, 40) along its entire perimeter.

4. Drive according to claim 1, **characterised in that** the drive shaft (34, 36) is connected to the drive gearwheel (62, 64) which is couplable to the output shaft (67), wherein a gearing system is provided in particular between the drive and output shaft.

5. Drive according to claim 1, **characterised in that** in particular the teeth adjoining the gap (70, 72) in the toothed structure of the drive gearwheel (62, 64) differ in tooth height and/or flank angle from the other teeth of the drive gearwheel (62, 64).

6. Drive according to claim 1, **characterised in that** the output shaft (67) is rigidly connected to a belt spindle (12).

7. Drive according to claim 1, **characterised in that** the pressure chamber has two pressure cells (26, 28) in each of which a rigid arm (38, 40) fastened to a drive shaft (34, 36) is provided.

8. Drive according to claim 1, **characterised in that** the drive shaft (34, 36) is couplable via the drive gearwheel (62, 64) and the gearwheel (66) to the output shaft (67) so that interposition of a coupling is not necessary.

9. Drive according to claim 1, **characterised in that** when the gas generator (18) is triggered the drive shaft (34, 36) swivels as a result of which the drive gearwheel (62, 64) of the drive shaft (34, 36) automatically meshes with the gearwheel (66) of the output shaft (67) so that interposition of a coupling is not necessary.

10. Drive according to claim 1, **characterised in that** after triggering the gas generator (18) and moving the arm (38, 40) the output shaft (67) coupled to the drive shaft (34, 36) is freely rotatable.

## Revendications

1. Dispositif d'entraînement pour une broche de ceinture (12), comprenant
un boîtier (14) comportant un générateur de gaz (18), dont l'ouverture de sortie de gaz (19) débouche dans un espace de pression (27,28) prévu à l'intérieur du boîtier (14), et
au moins un arbre d'entraînement (34,36), qui est disposé de manière à pouvoir tourner dans le boîtier (14) et sur lequel est fixé au moins un élément d'entraînement, qui peut être chargé par la pression de gaz du générateur de gaz (18), et de ce fait, fait tourner l'arbre d'entraînement (34,36),
dans lequel l'élément d'entraînement est un bras rigide (38,40) fixé à l'arbre d'entraînement (34,36),
**caractérisé en ce que**
l'arbre d'entraînement (34,36) est relié à un pignon d'entraînement (62,64) qui comporte, dans sa denture, un intervalle vide (70,72), dans la zone duquel un pignon (66) d'un arbre mené (67) peut tourner librement.

2. Dispositif d'entraînement selon la revendication 1,
**caractérisé en ce qu'**une paroi intérieure (30,32) de la chambre de pression (26, 28) possède un rayon de courbure constant par rapport à l'arbre de l'axe d'entraînement (34,36) et s'étendant notamment sur un angle périphérique d'environ 270°.

3. Dispositif d'entraînement selon la revendication 1, **caractérisé en ce que** le bras (38,40) est équipé d'un élément d'étanchéité (44,42) qui s'étend à l'intérieur de la chambre de pression (26,28) dans la direction axiale de l'arbre d'entraînement (34,36) et qui entoure notamment le bras (38,40) sur l'ensemble de sa périphérie.

4. Dispositif d'entraînement selon la revendication 1, **caractérisé en ce que**
le dispositif d'entraînement (34,36) est relié au pignon d'entraînement (62,64) qui peut être couplé à l'arbre mené (67), une démultiplication étant prévue notamment entre l'arbre d'entraînement et l'arbre mené.

5. Dispositif d'entraînement selon la revendication 1, **caractérisé en ce que** les dents, notamment celles qui jouxtent l'intervalle vide (70,72) de la denture du pignon d'entraînement (62,64), ont une hauteur de dent et/ou un angle de flanc, qui diffèrent de ceux des autres dents du pignon d'entraînement (62,64).

6. Dispositif d'entraînement selon la revendication 1, **caractérisé en ce que** l'arbre mené (67) est relié rigidement à une broche de ceinture (12).

7. Dispositif d'entraînement selon la revendication 1, **caractérisé en ce que** l'espace de pression comporte deux chambres de pression (26,28), dans lesquelles est prévu respectivement un bras rigide (38,40) fixé à un arbre d'entraînement (34,36).

8. Dispositif d'entraînement selon la revendication 1, **caractérisé en ce que** l'arbre d'entraînement (34, 36) peut être couplé à l'arbre mené (64) par l'intermédiaire du pignon d'entraînement (62,64) et du pignon (66) de telle sorte que le montage intercalaire d'un accouplement n'est pas nécessaire.

9. Dispositif d'entraînement selon la revendication 1, **caractérisé en ce que**, lors du déclenchement du générateur de gaz (18), l'arbre d'entraînement (34,36) pivote, ce qui a pour effet que le pignon d'entraînement (62,64) de l'arbre d'entraînement (34,36) engrène automatiquement avec le pignon (66) de l'arbre mené (67), de sorte que le montage intercalé d'un accouplement n'est pas nécessaire.

10. Dispositif d'entraînement selon la revendication 1, **caractérisé en ce qu'**après le déclenchement du générateur de gaz (18) et le déplacement du bras (38,40), l'arbre mené (67) couplé à l'arbre d'entraînement (34,36) peut tourner librement.
